# FASCICULE DE BREVET EUROPEEN

(11) **EP 0 842 701 B1**
(45) Date de publication et mention de la délivrance du brevet: **08.10.2003**
(21) Numéro de dépôt: 97402641.1
(22) Date de dépôt: 05.11.1997
(51) Int. Cl.: B01J 37/20

(54) **Procédé de présulfurisation hors site d'un catalyseur de traitement d'hydrocarbures**
Ex-Situ Vorsulfurisierung eines Katalysators zur Behandlung von Kohlenwasserstoffen
Ex situ pre-sulfurisation of a hydrocarbon treatment catalyst

(30) Priorité: 13.11.1996 FR 9613798
(43) Date de publication de la demande: 20.05.1998
(73) Titulaire: EURECAT SA., 07800 La Voulte-sur-Rhône (FR)
(72) Inventeur: Dufresne, Pierre, 26000 Valence (FR); Brahma, Nilanjan, 07800 LA Voulte Sur Rhone (FR)
(74) Mandataire: Benoist, François

(56) Documents cités:
- EP-A- 0 359 356
- EP-A- 0 517 555
- EP-A- 0 530 068
- EP-A- 0 707 890

## Description

Il est souvent souhaitable de procéder à une sulfuration (généralement appelée "présulfuration") des métaux entrant dans la composition de certains catalyseurs de raffinage et/ou d'hydroconversion d'hydrocarbures, soit lorsque ces catalyseurs sont neufs, soit à l'issue de la régénération de ces catalyseurs avant de les réutiliser.

Une présulfuration des catalyseurs frais, neufs ou régénérés est ainsi souhaitable pour l'emploi de ces catalyseurs dans les réactions de raffinage, par exemple les réactions d'hydrotraitement ou hydrodésulfuration ou d'hydrocraquage de diverses coupes pétrolières dont il convient, avant emploi, d'abaisser la teneur en soufre ou d'améliorer d'autres caractéristiques.

Ainsi, avant d'être utilisé, le catalyseur frais, neuf ou régénéré, était soumis généralement dans l'art antérieur, à une sulfuration (présulfuration) effectuée dans le réacteur d'hydrodésulfuration. Cette sulfuration permet d'inclure dans le catalyseur, par exemple, 50 à 110 % environ des quantités stoechiométriques de soufre calculées sur les quantités de sulfure de formules, par exemple Co₉S₈, MoS₂, WS₂ et Ni₃S₂.

Actuellement, la régénération des catalyseurs se fait de plus en plus chez un spécialiste de la régénération de catalyseurs, parfois dans une unité différente de l'unité industrielle. Or, il parait raisonnable de penser à restituer au raffineur un produit prêt à l'emploi, ce qu'à permis le procédé efficace du brevet européen de la demanderesse EP-B.130850 (ou US-A-4530917) dans lequel un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène.

D'une façon plus précise, dans le brevet européen n° EP-B-130850 ou US A 4530917 de la demanderesse (procédé appelé SULFICAT), le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré, qu'arbitrairement on appelle prétraitement "hors-site" ou "ex-situ", qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement "in situ") c'est-à-dire en tête des réacteurs ou dans des zones plus au moins en communication directe avec ces réacteurs, nécessitant d'opérer dans des conditions opératoires, (de température, pression ou autres), imposées au moins en partie par les conditions opératoires des réacteurs eux-mêmes ou des annexes de ces réacteurs (zone d'hydrogénation préalable du catalyseur par exemple).

En résumé, le brevet européen de la demanderesse EP-8-130850 concerne un procédé (appelé donc SULFICAT) permettant, lorsque le catalyseur sera soumis dès son démarrage, de préférence sur le site ("in situ") à la réaction classique d'activation en présence d'hydrogène, au-dessus de 100 °C, de procéder, ensuite grâce à la présence d'hydrogène sur le site, à la sulfuration au taux requis, stoechiométrique ou non stoechiométrique, du ou des métaux actifs entrant dans la composition du catalyseur. Le procédé consiste à incorporer en l'absence d'hydrogène dans la porosité du catalyseur neuf ou régénéré au moins un polysulfure organique.

La sulfuration du catalyseur peut ainsi être faite comme suit : dans une première étape réalisée "ex-situ", en l'absence d'hydrogène, on traite le catalyseur à l'aide de l'agent de sulfuration de façon à incorporer partiellement ou totalement cet agent dans la porosité du catalyseur, ledit agent de sulfuration étant utilisé en solution dans un solvant ; dans une deuxième étape, réalisée "in situ", et de préférence à une température au-dessus de 150 °C, on procède à une étape d'activation du catalyseur effectuée en présence d'hydrogène, la quantité requise de soufre se fixant grâce à la présence d'hydrogène, sur le ou les métaux entrant dans la composition du dit catalyseur.

La technique décrite ci-dessus a été perfectionnée dans le brevet EP-B-181.254 ou US-A-4719 195. L'objet de ces deux brevets est de conduire "ex situ" la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être sulfurés.

L'agent de présulfuration était ici un polysulfure organique. On peut citer, à titre d'exemple préféré de polysulfure, le ditertiododecylpolysulfure (TPS 32 d'ELF). On peut citer également le ditertiononylpolysulfure (TPS 37 d'ELF). L'agent de sulfuration est utilisé, dilué dans un solvant adéquat. Le solvant choisi peut être ainsi un des solvants suivants utilisés seuls ou en mélange ensemble :
- une essence légère bouillant par exemple entre environ 60 et 95 °C,
- une essence de type hexane bouillant entre 63 et 68 °C environ,
- une essence de type F bouillant entre environ 100 et 160 °C,
- une essence de type "white spirit" bouillant entre environ 150 et 250 °C,
- ou toute coupe hydrocarbonée ou non, équivalente aux essences précédentes.

Par la suite, on a perfectionné le procédé SULFICAT décrit ci-dessus après avoir découvert que les qualités des méthodes décrites dans les brevets EP-B-130.850 (US-A-4530917) et EP-B-181254 (US-A-4719195) de la demanderesse sont encore améliorées si on utilise non pas le polysulfure organique seul, mais en mélange dans des quantités critiques, avec du soufre élémentaire.

Cette technique améliorée de la demanderesse est décrite dans EP-B-448435 ou US-A-5,139,983. Le soufre élémentaire est utilisé par exemple sous forme de soufre fondu, de soufre en poudre, en fleur de soufre, selon toute méthode adéquate, par exemple celle décrite dans le brevet de la demanderesse EP-B-153233.

Les procédés qui précédent ont fait l'objet d'un autre type de perfectionnement de la demanderesse décrit dans EP-B-466 568 (US-A-5153 163) appelé "SURECAT" et concernant la préréduction du catalyseur accompagnée d'une passivation sulfurante.

Dans un autre procédé de la demanderesse, décrit dans EP-B-564 317, la présulfuration du catalyseur est effectuée soit en présence d'au moins un polysulfure organique, soit en présence de soufre élémentaire, soit à l'aide à la fois d'au moins un polysulfure organique et de soufre élémentaire. De préférence, on utilise un mélange d'au moins un polysulfure organique et de soufre élémentaire. Le solvant utilisé est généralement et de préférence un white spirit ou un solvant équivalent. On utilise en outre un composé oléfinique, notamment du type huile de colza.

On notera que d'autres brevets et notamment US-A 4,943,547 et US-A 5,215,954 concernant également la présulfuration de catalyseurs par une méthode permettant l'incorporation de soufre élémentaire dans la porosité du catalyseur ; mais ici le soufre élémentaire pénètre dans la porosité essentiellement par fusion ou par sublimation.

Dans l'art antérieur on trouve déjà l'idée d'utilisation d'une partie de soufre liquide c'est à dire à l'état liquide. Voir notamment EP-A-0707890 de la demanderesse. L'incorporation de soufre dans le catalyseur nécessite pour la bonne marche du procédé la présence d'un constituant de type oléfinique. Voir également EP-A-359356, demande de brevet dans laquelle, avant l'incorporation de soufre à une temperature supérieure au point de fusion du soufre il est nécessaire d'abord de faire un précontactage du catalyseur avec du soufre élémentaire à une température inférieure à la température de fusion du soufre, puis d'opérer un mélange avec un solvant.

La présente invention permet de présulfurer aisément et avec efficacité un catalyseur de raffinage ou de pétrochimie ("hydroprocessing") en mettant ce catalyseur au contact de soufre élémentaire se présentant à l'état liquide c'est-à-dire soit utilisé sous forme fondue, soit dissous dans un liquide (et non plus à l'état solide ou en suspension dans un liquide). Ce liquide ou cette solution liquide doit ainsi être à la température d'au moins 120 °C, de préférence d'au moins 125 °C avant d'être mis en contact avec le dit catalyseur. Selon l'invention, la présence d'un agent de stabilisation spécifique est nécessaire pour la mise en oeuvre du procédé avec ultérieurement une excellente stabilité conférée au catalyseur.

Dans la présente invention, on utilise donc une solution de soufre ou du soufre liquide. Pour l'opération de mise en contact du soufre élémentaire avec un catalyseur, le soufre élémentaire est utilisé seul ou est associé à au moins un composé du soufre adéquat et notamment au moins un polysulfure organique ou tout autre composé du soufre dans lequel le soufre peut se dissoudre. S'il est utilisé seul, le soufre élémentaire est d'abord chauffé au dessus de la température de son point de fusion (autour de 119 °C). S'il est utilisé en combinaison avec notamment un polysulfure organique, on peut concevoir soit de le chauffer seul au dessus de la température de son point de fusion puis de le mélanger avec au moins un polysulfure organique lui-même préchauffé de son côté à une température suffisante pour qu'en mélangeant ce polysulfure organique avec du soufre élémentaire fondu, le soufre élémentaire ne cristallise pas et ne soit donc pas en suspension dans le mélange soufre élémentaire-polysulfure organique. Il faut pouvoir obtenir une solution complètement liquide, et généralement claire ou limpide, (de préférence claire,) de présulfuration.

Le liquide à base de soufre élémentaire avec ou sans composé du soufre, par exemple un polysulfure organique est versé sur le catalyseur afin d'en remplir une partie des pores de ce catalyseur. Conformément à l'invention, pour stabiliser l'incorporation de soufre dans les pores du catalyseur, il convient également d'introduire sur la masse catalytique un agent de stabilisation, qui peut ou non être dissous dans un solvant. Ce solvant peut être un white spirit ou toute autre coupe pétrolière par exemple, ou autre solvant classique.

Dans le cas où l'agent de stabilisation est ajouté simultanément ou postérieurement à l'addition de soufre élémentaire, cet agent de stabilisation de soufre, dilué ou non dans un solvant, est de préférence chauffé à une température de préférence supérieure à la température de fusion du soufre élémentaire, supérieure par exemple à 120 °C, plus particulièrement supérieure à 125 °C.

Dans le cas où l'agent de stabilisation est ajouté avant l'addition de soufre élémentaire, cet agent de stabilisation peut être ajouté sur le catalyseur à toute température adéquate, par exemple à température ordinaire.

L'invention se caractérise essentiellement par le fait que l'agent de statibilisation est choisi dans le groupe constitué par un glycérol le glucose et le fructose.

De tels agents sont des stabilisants pour la méthode selon l'invention de présulfuration ou sulfuration de catalyseurs. ils n'ont donc pas la même fonction que par exemple dans la demande de brevet WO 94/25.157 dans laquelle on utilise des composés similaires tels que les hydrocarbures contenant de l'oxygène et contenant au moins 12 atomes de carbone par molécule, ces composés ayant pour rôle d'éliminer l'effet auto inflammation (ou self heating) de catalyseurs déjà sulfurés.

De façon plus détaillée, l'invention concerne donc un procédé de présulfuration d'un catalyseur de raffinage ou de pétrochimie (catalyseur d'hydroprocessing) comprenant l'introduction de soufre élémentaire liquide ou de soufre élémentaire dissous dans un liquide dans un catalyseur, avec introduction soit en même temps, soit après l'introduction du soufre élémentaire dans le catalyseur (introduction simultanée ou postérieure du dit agent par rapport à l'introduction de soufre élémentaire dans le catalyseur) d'un agent de stabilisation du soufre. Mais il est également possible de mettre en contact le catalyseur et l'agent de stabilisation avant de procéder à l'imprégnation du catalyseur par du soufre élémentaire. Cette méthode est généralement préférée.

Cette imprégnation de catalyseur par du soufre élémentaire peut être effectuée par tout moyen par exemple par barbottage, agitation, par atomisation de soufre liquide sur le catalyseur, etc.

Le soufre élémentaire liquide ou dissous dans au moins un autre composé liquide du soufre est introduit sur la masse catalytique par barbottage ou par atomisation ou tout moyen équivalent.

Lorsque le liquide dans lequel est dilué le soufre élémentaire liquide ou dans lequel le soufre élémentaire est dissous est un polysulfure organique ou composé équivalent, on ne voit généralement qu'une seule phase liquide, en particulier il n'y a pas une phase séparée de soufre fondu.

Une variante du procédé selon l'invention comporte la préparation d'abord d'un liquide de présulfuration, de préférence limpide, comportant soit du soufre élémentaire liquide, soit un mélange de soufre élémentaire et au moins un composé du soufre, la température du dit liquide de présulfuration pouvant être également supérieure à 120° C, puis comporte la mise en contact de ce liquide avec le dit catalyseur, le dit catalyseur étant également mis en contact, simultanément ou ultérieurement ou antérieurement avec un agent de stabilisation tel que défini ci-dessus.

Lorsqu'on utilise comme liquide de présulfuration un mélange de soufre élémentaire et d'un composé du soufre, le soufre élémentaire et le composé soufré peuvent chacun être chauffés séparémment avant d'être mélangés.

De même lorsqu'on utilise comme liquide de présulfuration un mélange de soufre élémentaire et d'un composé soufré, le dit soufre élémentaire et le dit composé soufré peuvent être chauffés ensemble à une température supérieure à 120 °C.

Le liquide de présulfuration peut renfermer en volume 20 à 100 % de soufre élémentaire liquide (de préférence 25 à 100 %) et 0 à 80 % (de préférence 0 à 75 %) de composé du soufre.

Dans une autre variante du procédé, le dit agent de stabilisation du soufre est mis en contact avec le catalyseur après ou avant (et de préférence avant) que celui-ci ait été mis en contact avec le dit liquide de présulfuration.

Comme indiqué plus haut, l'agent de stabilisation peut être utilisé tel quel, c'est-à-dire dans une forme non diluée, mais peut aussi être utilisé après avoir été mélangé ou dissous dans un solvant.

Le dit agent de sulfuration peut représenter alors en volume 1 à 100, ou 20 à 100, ou 2 à 50 %, de préférence 30 à 90 %, voire 4 à 40 %, plus particulièrement 50 à 80 %, voire 7 à 30 % du mélange global solvant-agent de sulfuration. Le dit solvant peut être un hydrocarbure.

On notera que pour éviter une recristallisation de soufre élémentaire en le mettant, et après l'avoir mis, en contact avec le catalyseur, on effectue alors le contact du soufre élémentaire avec un catalyseur qui pourra lui-même avoir été préchauffé à une température supérieure à 120 °C environ, de préférence 125 °C environ.

D'une façon plus précise, (ce contact s'effectuant dans toute enceinte adéquate : réacteur, four, etc), la température de contact entre le catalyseur et le soufre élémentaire liquide ou le soufre élémentaire en solution (dans un autre composé du soufre), par exemple dans un polysulfure organique, est comprise entre 120 et 300 °C, voire entre 125 °C et 250 °C environ.

De même le contact entre la masse catalytique et l'agent de stabilisation (utilisé seul ou en mélange avec un autre solvant) est également comprise entre 0 °C et 250° C, voire entre 0 C et 200° C environ, ou encore entre 120 et 250° C ou entre 125 et 200° C. Les températures et temps de contact sont choisis de façon à faciliter au maximum l'imprégnation et/ou la fixation du soufre dans les pores du catalyseur. Ces deux types de "contact" peuvent d'ailleurs, si nécessaire, être ensuite prolongés éventuellement dans une autre enceinte (par exemple un autre four) le temps nécessaire à une présulfuration convenable. On peut terminer avantageusement ces contacts entre par exemple 160° C et 400° C, par exemple entre 200° C et 350° C ou 210° C et 320 °C.

### Exemple 1 (comparatif) : Emploi de soufre élémentaire et polysulfure comme agents de présulfuration en combinaison avec un alcool type iso-dodecylalcool

On se propose de présulfurer 150 g d'un catalyseur d'hydrodésulfuration renfermant en poids 4% de CoO et 19% de MoO3 sur support d'alumine. La solution de présulfuration renferme 33% en volume de soufre élémentaire liquide (SE) et 67% en volume de TPS37 (polysulfure organique nommé di-tertio-nonyl polysulfure commercialisé par Elf Atochem). A 130°C ce mélange A est une solution parfaitement limpide. D'autre part, un mélange B contenant 50.1% en volume de White Spirit, une essence lourde dont les points initiaux et finaux d'ébullition sont respectivement 180 et 270°C, et 49.9% en volume de iso-dodecylalcool ou i-C12OH (commercialisé par Exxon Chemicals France). Le catalyseur est imprégné à 130°C en remplissant son volume poreux consécutivement par le mélange A à 26.3% du volume, puis 15 minutes plus tard par le mélange B à 73.7% du volume. On porte le solide ainsi imprégné à la température de 250°C pendant 2 heures afin d'évaporer le solvant. Le produit obtenu contient en poids 7.7% de soufre et 11.1% de carbone. Ce catalyseur dénommé par la suite catalyseur A est caractérisé et les résultats et les conditions opératoires sont présentés dans le tableau 1. La perte au feu (LOI1) est déterminée après calcination à 500°C sous air pendant une heure. Les stoechiométries ST1 et ST2 correspondent respectivement aux degrés de sulfuration comparés à MoS₂/Co₉S₈ pour le catalyseur tel quel après sulfuration et après traitement de lixiviation au toluène bouillant permettant d'éliminer le soufre soluble.

### Exemple 2 (comparatif) : Emploi de soufre élémentaire et polysulfure comme agents de présulfuration en combinaison avec un alcool type normal dodecylalcool

150 g du catalyseur déjà utilisé dans l'exemple 1 est consécutivement imprégné à 130°C par une solution A comme dans l'exemple 1. La solution B est un mélange contenant 39% en volume d'un White Spirit, identique à celui dans l'exemple 1, et 61% en volume de normal dodecylalcool ou n-C12OH (commercialisé par Exxon Chemicals, France). Le catalyseur est imprégné à 130°C en remplissant son volume poreux consécutivement par le mélange A à 26.3% du volume, puis 15 minutes plus tard par le mélange B à 73.7% du volume. On porte le solide ainsi imprégné à 250°C pendant 2 heures, afin d'évaporer le solvant. Le produit obtenu contient en poids 7.8% de soufre et 10.6% de carbone. Ce catalyseur est dénommé catalyseur B. Les résultats de la caractérisation et les conditions opératoires sont présentés dans le tableau 1.

### Exemple 3 (comparatif) : Emploi de soufre élémentaire comme agent de présulfuration en combinaison avec un alcool type iso-dodecyl alcool.

150 g du catalyseur déjà utilisé dans les exemples 1-2 est consécutivement imprégné à 130°C par une solution A de présulfuration qui renferme 100% en volume de soufre élémentaire (SE). D'autre part, un mélange B contenant 40% en volume de White Spirit, une essence lourde comme celle utilisée dans les exemples 1-2, et 60% en volume de i-C12OH, comme utilisé dans l'exemple 1. Le catalyseur est imprégné à 130°C en remplissant son volume poreux consécutivement par le mélange A à 12% du volume, puis 15 minutes plus tard par le mélange B à 88% du volume. On porte le solide ainsi imprégné à 250°C pendant 2 heures, afin d'évaporer le solvant. Le produit obtenu contient en poids 8.2% de soufre et 9.8% de carbone. Ce catalyseur, dénommé par la suite catalyseur C, est caractérisé et les résultats et les conditions opératoires sont présentés dans le tableau 1.

### Exemple 4 (non-conforme à l'invention): Emploi de soufre élémentaire uniquement comme agent de présulfuration

150 g du catalyseur déjà utilisé dans les exemples 1-3 est consécutivement imprégné à 130°C par une solution A qui renferme 100% en volume de soufre élémentaire (SE). D'autre part, un mélange B contenant 100% en volume de White Spirit, une essence lourde comme celle utilisée dans les exemples 1-3. Le catalyseur est imprégné à 130°C en remplissant son volume poreux consécutivement par le mélange A à 12% du volume, puis 15 minutes plus tard par le mélange B à 88% du volume. On porte le solide ainsi imprégné à 250°C pendant 2 heures, afin d'évaporer le solvant. Le produit obtenu contient en poids 8.5% de soufre et 0.5% de carbone. Ce catalyseur, dénommé par la suite catalyseur D, est caractérisé et les résultats et les conditions opératoires sont présentés dans le tableau 1.

### Exemple 5 (non conforme à l'invention): Emploi de soufre élémentaire et polysulfure comme agents de présulfuration en combinaison avec un mercaptan type n-dodecyl mercaptan

150 g du catalyseur déjà utilisé dans les exemples 1-4 est consécutivement imprégné à 130°C par une solution A, comme dans les exemples 1-4, et une solution B . La solution B est un mélange contenant 50% en volume d'un White Spirit, identique à celui utilisé dans les exemples 1-4, et 50% en volume de n-dodecyl mercaptan (commercialisé par Elf Atochem). Le catalyseur est imprégné à 130°C en remplissant son volume poreux consécutivement par le mélange A à 26.3% du volume, puis 15 minutes plus tard par le mélange B à 73.7% du volume. On porte le solide ainsi imprégné à 250°C pendant 2 heures, afin d'évaporer le solvant. Le produit obtenu contient en poids 8.0% de soufre et 11.3% de carbone. Ce catalyseur est dénommé catalyseur E. Les résultats de la caractérisation et les conditions opératoires sont présentés dans le tableau 1.

### Exemple 6 : Emploi de soufre élémentaire comme agent de présulfuration en combinaison avec un alcool type glycérine ou (1.2.3) propanetriol.

150 g du catalyseur déjà utilisé dans l'exemple 1 est consécutivement imprégné à 130°C par une solution A comme dans l'exemple 1. La solution B est un mélange contenant 55% en volume de l'eau distillée et 45% en volume de glycérine (commercialisé par Elf Atochem). Le catalyseur est imprégné à 130°C en remplissant son volume poreux consécutivement par le mélange A à 11% du volume, puis 15 minutes plus tard par le mélange B à 89% du volume. On porte le solide ainsi imprégné à 250°C pendant 2 heures, afin d'évaporer le solvant. Le produit obtenu contient en poids 8.0% de soufre et 6.6% de carbone. Ce catalyseur est dénommé catalyseur F. Les résultats de la caractérisation et les conditions opératoires sont présentés dans le tableau 1.

### Exemple 7 (non conforme à l'invention) : Emploi de soufre élémentaire comme agent de présulfuration en combinaison avec un alcool type saccharose.

150 g du catalyseur déjà utilisé dans l'exemple 1 est consécutivement imprégné à 130°C par une solution A comme dans l'exemple 1. La solution B est un mélange contenant 67.7% en masse de l'eau distillée et 33.3% en masse de saccharose (commercialisé par Eridania Beghin Say). Le catalyseur est imprégné à 130°C en remplissant son volume poreux consécutivement par le mélange A à 11.4% du volume, puis 15 minutes plus tard par le mélange B à 88.6% du volume. On porte le solide ainsi imprégné à 280°C pendant 2 heures, afin d'évaporer le solvant. Le produit obtenu contient en poids 7.9% de soufre et 9.3% de carbone. Ce catalyseur est dénommé catalyseur G. Les résultats de la caractérisation et les conditions opératoires sont présentés dans le tableau 1.

**TABLEAU 1**

| **Exemple** | **1** | **2** | **3** | **4** | **5** | **6** | **7** |
|---|---|---|---|---|---|---|---|
| **Catalyseur** | **A** | **B** | **C** | **D** | **E** | **F** | **G** |
| A) Source soufre 1 (%) | SE ; 33% vol. | SE ; 33% vol. | SE ; 100% vol. | SE ; 100% vol. | SE ; 33% vol. | SE ; 100 % vol. | SE ; 100 % vol. |
| Source soufre 2 (%) | TPS37 67% vol. | TPS37 67% vol. | ---- | ---- | TPS37 67% vol. | ---- | ---- |
| B) White Spirit (vol. %) | 50.1 | 39 | 40 | 100 | 50 | 55 % | 67.7% * (masse) |
| Additif (vol. %) | iC12OH 49.9% | nC12OH 61% | iC12OH 60% | 0% | nC12SH 50% | glycérine 45% | saccharose 33.3% (masse) |
| Complément mél. B (% vol.) | 73.7 | 73.7 | 88 | 88 | 73.7 | 89% | 88.6% |
| T-imprégnation (°C) | 130 | 130 | 130 | 130 | 130 | 130 | 130 |
| T-séchage (°C) | 250 | 250 | 250 | 250 | 250 | 250 | 280 |
| % S1 | 7.7 | 7.2 | 8.2 | 8.5 | 8.0 | 8.0 | 7.9 |
| % C1 | 11.1 | 10.6 | 9.8 | 0.5 | 11.3 | 6.6 | 5.3 |
| % LOI1 | 18.9 | 18.5 | 16.5 | 8.8 | 17.9 | 16.1 | 12.8 |
| ST1 (%) | 95 | 96 | 98 | 93 | 97 | 95 | 91 |
| ST2 (%) | 90 | 92 | 94 | 56 | 95 | 95 | 88 |
| ΔH (j/g) | 0 | 0 | 0 | 120 | 0 | 0 | 0 |

| | | | | | | | |
|---|---|---|---|---|---|---|---|
| * eau, dans le cas de saccharose. | | | | | | | |

Le paramètre ΔH, mesuré à 1 bar de pression d'hydrogène (dans un appareil de type TG-ATD Setaram) donne une indication sur la chaleur globale générée pendant l'activation du catalyseur préconditionné sous hydrogène ainsi que la cinétique de la réaction.

Dans l'exemple 4 (non conforme à l'invention), le ΔH mesuré se situe autour de 120 j/g. Ceci indique que le manque de stabilisation du soufre correspond à une forte exothermie au moment de l'activation.

## Revendications

1. Procédé de présulfuration d'un catalyseur de raffinage ou de pétrochimie comprenant l'introduction du soufre élémentaire liquide ou du soufre élémentaire complétement dissous dans un liquide dans un catalyseur avec introduction simultanée, postérieure ou antérieure, d'au moins un agent de stabilisation du soufres qui est un glycérol, le glucose ou le fructose.

2. Procédé selon la revendication 1 dans lequel du soufre élémentaire liquide ou dissous dans au moins un autre composé liquide du soufre est introduit sur la masse catalytique par barbotage ou par atomisation ou tout moyen équivalent.

3. Procédé selon l'une des revendications 1 et 2 dans lequel le dit liquide dans lequel est dilué le soufre élémentaire liquide où dans lequel le soufre élémentaire est dissous est un polysulfure organique.

4. Procédé de présulfuration d'un catalyseur de raffinage ou de pétrochimie selon l'une des revendications 1 à 3, comprenant la préparation d'abord d'un liquide de présulfuration, limpide, contenant soit du soufre élémentaire liquide, soit un mélange de soufre élémentaire et d'au moins un composé du soufre, la température du dit liquide de présulfuration étant supérieure à 120 °C, puis la mise de ce liquide en contact avec le dit catalyseur, le dit catalyseur étant également mis en contact avec un agent de stabilisation. choisi dans groupe constitué par un glycérol, le glucose ou le fructose.

5. Procédé selon la revendication 4 dans lequel le composé du soufre est un polysulfure organique.

6. Procédé selon l'une des revendications 1 à 5 dans lequel on utilise comme liquide de présulfuration un mélange de soufre élémentaire et d'un composé du soufre, le soufre élémentaire et le composé soufré étant chacun chauffé séparément avant d'être mélangés.

7. Procédé selon l'une des revendications 1 à 6 dans lequel on utilise comme liquide de présulfuration un mélange de soufre élémentaire et d'un composé soufré, le dit soufre élémentaire et le dit composé soufré étant chauffés ensemble à une température supérieure 120 °C.

8. Procédé selon l'une des revendications 1 à 7 dans lequel le liquide de présulfuration renferme en volume 1 à 100 % de soufre élémentaire liquide (de préférence 2 à 50 %) et 7 à 30 % de composé de soufre.

9. Procédé selon l'une des revendications 1 à 8 dans lequel on effectue le contact du soufre élémentaire avec un catalyseur lui-même préchauffé à une température supérieure à environ 125 °C.

10. Procédé selon l'une des revendications 1 à 9 dans lequel l'introduction d'au moins un agent de stabilisation du soufre est simultanée ou postérieure à l'introduction du soufre élémentaire.

11. Procédé selon l'une des revendications 1 à 9 dans lequel l'introduction d'au moins un agent de stabilisation du soufre est antérieure à l'introduction du soufre élémentaire.

## Patentansprüche

1. Verfahren zur Vorschwefelung eines Katalysators der Raffinierung oder Petrochemie, umfassend: das Einführen flüssigen elementaren Schwefels oder in einer Flüssigkeit völlig gelösten Schwefels in einen Katalysator unter gleichzeitiger, späterer oder vorheriger Einführung wenigstens eines Schwefelstabilisierungsmittels, bei dem es sich um ein Glycerol, die Glucose oder Fructose handelt.

2. Verfahren nach Anspruch 1, bei dem elementarer Schwefel flüssig oder gelöst in wenigstens einer flüssigen Verbindung des Schwefels auf die katalytische Masse mittels Durchperlenlassens oder Zerstäubens oder eines anderen äquivalenten Mittels eingeführt wird.

3. Verfahren nach einem der Ansprüche 1 und 2, bei dem die Flüssigkeit, in welcher der elementare flüssige Schwefel gelöst wird oder in dem der elementare Schwefel gelöst wird ein organisches Polysulfid ist.

4. Verfahren zur Vorschwefelung eines Katalysators für die Raffinierung oder Petrochemie gemäß einem der Ansprüche 1 bis 3, umfassend: die Herstellung zunächst einer klaren Vorschwefelungsflüssigkeit, die entweder elementaren flüssigen Schwefel oder ein Gemisch elementaren Schwefels mit wenigstens einer Schwefelverbindung enthält, wobei die Temperatur der Vorschwefelungsflüssigkeit bei über 120°C liegt, dann Kontaktieren dieser Flüssigkeit mit diesem Katalysator, wobei der Katalysator ebenfalls mit einem Stabilisierungsmittel kontaktiert wird und gewählt ist aus der Gruppe, die gebildet wird durch ein Glycerol, die Glucose oder die Fructose.

5. Verfahren nach Anspruch 4, bei dem die Schwefelverbindung ein organisches Polysulfid ist.

6. Verfahren nach einem der Ansprüche 1 bis 5, bei dem man als Vorschwefelungsflüssigkeit ein Gemisch aus elementarem Schwefel und einer Schwefelverbindung verwendet, wobei der elementare Schwefel und die schwefelhaltige Verbindung getrennt, bevor sie vermischt werden, erwärmt werden.

7. Verfahren nach einem der Ansprüche 1 bis 6, bei dem als Vorschwefelungsflüssigkeit ein Gemisch aus elementarem Schwefel und einer schwefelhaltigen Verbindung verwendet, wobei der elementare Schwefel und diese schwefelhaltige Verbindung zusammen auf eine Temperatur oberhalb 120°C erwärmt werden.

8. Verfahren nach einem der Ansprüche 1 bis 7, bei dem die Vorschwefelungsflüssigkeit 1 bis 100 Vol.-% elementaren flüssigen Schwefels (bevorzugt 2 bis 50 %) und 7 bis 30 % einer Schwefelverbindung umschließt.

9. Verfahren nach einem der Ansprüche 1 bis 8, bei dem man die Kontaktierung des elementaren Schwefels mit einem Katalysator vornimmt, der selbst auf eine Temperatur oberhalb etwa 125 °C vorgewärmt wurde.

10. Verfahren nach einem der Ansprüche 1 bis 9, bei dem das Einführen wenigstens eines Stabilisierungsmittels für den Schwefel gleichzeitig oder nach dem Einführen des elementaren Schwefels vorgenommen wird.

11. Verfahren nach einem der Ansprüche 1 bis 9, bei dem das Einführen wenigstens eines Stabilisierungsmittels für den Schwefel vor dem Einführen des elementaren Schwefels vorgenommen wird.

## Claims

1. A process for pre-sulphurizing a catalyst for refining or for petrochemistry, comprising introducing liquid elemental sulphur or elemental sulphur completely dissolved in a liquid into a catalyst with simultaneous, subsequent or previous introduction of at least one sulphur stabilization agent, namely a glycerol, glucose or fructose.

2. A process according to claim 1, in which the elemental sulphur, liquid or dissolved in at least one other liquid sulphur compound, is introduced into the catalytic mass by bubbling or by atomization or by any equivalent means.

3. A process according to claim 1 or claim 2, in which said liquid in which the liquid elemental sulphur is diluted or in which the elemental sulphur is dissolved is an organic polysulphide.

4. A process for pre-sulphurizing a catalyst for refining or for petrochemistry according to one of claims 1 to 3, comprising initially preparing a clear pre-sulphurization liquid containing either liquid elemental sulphur or a mixture of elemental sulphur and at least one sulphur compound, the temperature of said pre-sulphurization liquid being over 120°C, then bringing said liquid into contact with said catalyst, said catalyst also being brought into contact with a stabilizing agent selected from the group constituted by a glycerol, glucose and fructose.

5. A process according to claim 4, in which the sulphur compound is an organic polysulphide.

6. A process according to one of claims 1 to 5, in which the pre-sulphurization liquid used is a mixture of elemental sulphur and a sulphur compound, the elemental sulphur and the sulphur-containing compound each being heated separately before being mixed.

7. A process according to one of claims 1 to 6, in which the pre-sulphurization liquid used is a mixture of elemental sulphur and a sulphur-containing compound, said elemental sulphur and said sulphur-containing compound being heated together to a temperature of more than 120°C.

8. A process according to one of claims 1 to 7, in which the pre-sulphurization liquid comprises 1% to 100% by volume of liquid elemental sulphur (preferably 2% to 50%) and 7% to 30% of sulphur compound.

9. A process according to one of claims 1 to 8, in which the elemental sulphur is brought into contact with a catalyst that has itself been pre-heated to a temperature of more than about 125°C.

10. A process according to one of claims 1 to 9, in which said at least one sulphur stabilization agent is/are introduced simultaneously with or subsequently to introducing the elemental sulphur.

11. A process according to one of claims 1 to 9, in which said at least one sulphur stabilization agent is/are introduced subsequently to introducing the elemental sulphur.
